# EUROPEAN PATENT SPECIFICATION

(11) **EP 2 966 270 B1**
(45) Date of publication and mention of the grant of the patent: **26.10.2016**
(21) Application number: 15170444.2
(22) Date of filing: 03.06.2015
(51) Int. Cl.: F01D 25/24, F01D 25/28, F02K 9/34

(54) **COMPONENT**
KOMPONENTE
COMPOSANT

(30) Priority: 01.07.2014 GB 201411657
(43) Date of publication of application: 13.01.2016
(73) Proprietor: Rolls-Royce plc, London SW1E 6AT (GB)
(72) Inventor: Care, Ian, Derby, Derbyshire DE24 8BJ (GB); Evans, Dale, Derby, Derbyshire DE24 8BJ (GB)
(74) Representative: Rolls-Royce plc

(56) References cited:
- EP-A2- 1 927 732
- FR-A1- 2 968 364
- GB-A- 2 449 907
- US-A1- 2010 015 394
- US-A1- 2014 113 088

## Description

### FIELD OF INVENTION

The present invention relates to a casing, a gas turbine engine, a composite structure and/or a component having first and second bodies joined by flanged ends.

### BACKGROUND

Turbofan gas turbine engines (which may be referred to simply as 'turbofans') are typically employed to power aircraft. Turbofans are particularly useful on commercial aircraft where fuel consumption is a primary concern. Typically a turbofan gas turbine engine will comprise an axial fan driven by an engine core. The engine core is generally made up of one or more turbines which drive respective compressors via coaxial shafts. The fan is usually driven directly off an additional lower pressure turbine in the engine core.

The fan comprises an array of radially extending fan blades mounted on a rotor and will usually provide, in current high bypass gas turbine engines, around seventy-five percent of the overall thrust generated by the gas turbine engine. The remaining portion of air from the fan is ingested by the engine core and is further compressed, combusted, accelerated and exhausted through a nozzle. The engine core exhaust mixes with the remaining portion of relatively high-volume, low-velocity air bypassing the engine core through a bypass duct.

The fan is surrounded by a casing. The casing may be formed from composite (non-metallic) materials using methods understood in the art. It is desirable to reduce the overall weight of the casing. A known method of reducing the weight of the casing is to provide a stiffening ring surrounding a barrel of the casing. An example casing having a stiffening ring is described in US2006/201135.

US2007/0081887 discloses a casing having an inverted U shaped stiffener bonded to an outer surface of the composite barrel. The U shaped stiffener is designed to become detached from the casing if a fan blade is released from the fan so as to avoid stress concentrations.

There is a desire in the aerospace industry to reduce the thickness of the fan casing so as to reduce the weight of the engine.

GB2449907 relates to a method of manufacturing a composite casing with flange. US2014/0113088 relates to a circumferential stiffener for a composite fan case.

### SUMMARY OF INVENTION

A first aspect the invention provides a composite casing according to claim 1. The provision of the stiffening ring means that the barrel can be of a thinner thickness than casings of the prior art, which can reduce to the overall weight of the casing.

Provision of a stiffening ring having a waved profile has been found to provide a casing having improved stiffness compared to casings of the prior art. The waved profile also provides a more stable footprint so as to improve rolling resistance of the stiffening ring.

Barrel is understood in the art as referring to a substantially annular body.

It can be considered that, at different circumferential positions the waved profile has a varying axial position.

The stiffening ring may comprise a first member and a second member joined together. A face of the first member may have a waved profile and a face of the second member may have a waved profile that is complementary to the waved profile of the first member. The waved profile of the first and second member may form the section of the stiffening ring having the waved profile.

The waved profile may not comprise any sharp points or sharp transitions from one direction to another.

The waved profile may have a sinusoidal form.

The stiffening ring may be integrally formed with the barrel.

The stiffening ring may include a web extending radially from the barrel and a lip positioned distal to the barrel and extending in an axially forward and an axially rearward direction. That is, the combined shape of a portion of the barrel and stiffening ring may form an I-beam. The stiffening ring may have a T-shape or may be considered to have a C-shape.

The web may include a region having a waved profile.

The axial position of the web with respect to the lip may vary circumferentially along the stiffening ring.

The barrel may comprise a first body having a flanged end and a second body having a flanged end. The first body may be connected to the second body via the flanged ends of the first and second bodies. An end face of the flanged end of the first body may have a waved profile. An end face of the flanged end of the second body may have a waved profile. The waved profile of the end face of the first body may be complementary to the waved profile of the end face of the second body.

The first body and/or the second body may be annular bodies.

The flanged ends may be formed integrally with the respective first and second bodies.

The flange of the first body may be releasably joined to the flange of the second body. For example, the first flange may be bolted to the second flange.

The flange of the first body may be stitched or pinned to the flange of the second body.

The flanged ends of the first body and the second body may include a lip at an end distal to the first and second body respectively. For example, the lip, flanged end and a portion of the respective first or second body can be considered to form a C-shaped portion. The C-shaped portion of the first body and the C-shaped portion of the second body can be considered to form an I-beam.

The flanged end of the first and/or second body may comprise a flange body and a face plate having a waved profile. The face plate may be connected to the flange body.

The face plate may be formed using a braided composite structure or an interleaved tape laid formation.

The face plate may be stitched or pinned to the flange body.

The first body may be frusto-conical and the second body may be cylindrical.

The barrel may be formed using a composite tape lay-up structure.

A composite fan casing may have the features of the casing of first aspect.

An aspect of the invention provides a gas turbine engine comprising the casing according to the first aspect or the previously mentioned fan casing.

An example composite I-beam structure comprises two end plates and a web extending between said end plates. At least a portion of the web has a waved profile. The waved profile extends in a longitudinal direction between the two end plates such that the position of the web with respect to the end plates varies along the longitudinal length of the I-beam structure.

The I-beam structure may comprise two C-shaped bodies. A web of a first C-shaped body may have an end face having a waved profile and a web of a second C-shaped body may have an end face having a waved profile that is complimentary to the waved profile of the first C-shaped body.

The web of one C-shaped body may comprise a flange or web body and a face plate having a waved profile. The face plate may be connected to the flange or web body.

The I-beam structure may have one or more features of the stiffening ring of the first aspect.

An exemple component comprises a first body having a first flanged end and a second body having a second flanged end. The first body is connected to the second body via the flanged ends. An end face of the flanged end of the first body has a waved profile and an end face of the flanged end of the second body has a waved profile. The waved profile of the end face of the first body is complementary to the waved profile of the end face of the second body.

The component may be a composite component.

### DESCRIPTION OF DRAWINGS

The invention will now be described, by way of example only, with reference to the accompanying drawings in which:
Figure 1 illustrates a cross section through a gas turbine engine;
Figure 2 illustrates a partial cross section through a fan casing of the gas turbine engine of Figure 1;
Figure 3 illustrates a partial section view through the line A-A of Figure 2;
Figure 4 illustrates a partial plan view of the stiffening ring of Figure 2 viewed in a direction B;
Figure 5 illustrates a partial section view of a stiffening ring of Figure 2 in the region C of Figure 2; and
Figures 6 and 7 illustrate a partial section view of alternative arrangements for connecting two flanges to form a stiffening ring.

### DETAILED DESCRIPTION

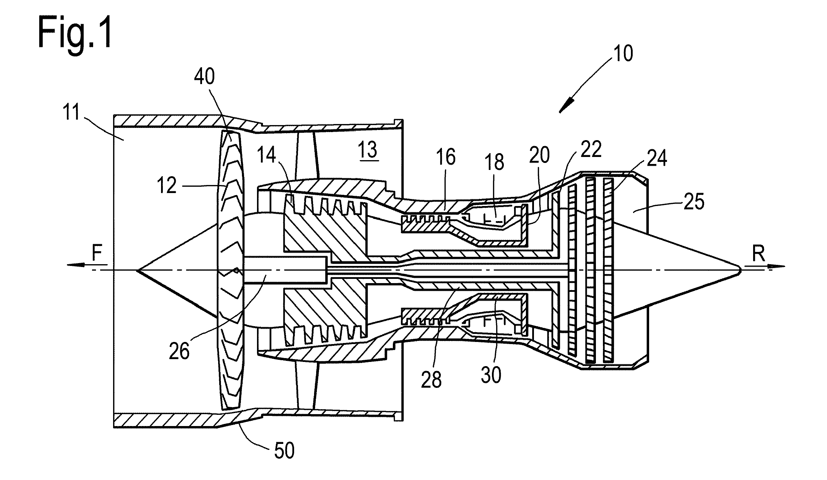

With reference to Figure 1 a bypass gas turbine engine is indicated at 10. The engine 10 comprises, in axial flow series, an air intake duct 11, fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of the gas turbine engine.

Air is drawn through the air intake duct 11 by the fan 12 where it is accelerated. A significant portion of the airflow is discharged through the bypass duct 13 generating a corresponding portion of the engine thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 generating the remainder of the engine thrust.

In the present application a forward direction (indicated by arrow F in Figure 1) and a rearward direction (indicated by arrow R in Figure 1) are defined in terms of axial airflow through the engine 10.

The intake fan 12 comprises an array of radially extending fan blades 40 that are mounted to the shaft 26. The shaft 26 may be considered a hub at the position where the fan blades 40 are mounted. Figure 1 shows that the fan 12 is surrounded by a fan casing 50 that also forms one wall or a part of the bypass duct 13.

The fan casing 50 is a composite fan casing. That is, the casing includes a fibrous material embedded in a resin matrix, typically referred to as an Organic Matrix Composite (OMC) material system. In the present embodiment the fan blades 40 are composite fan blades, but in alternative embodiments the fan blades may be metallic fan blades.

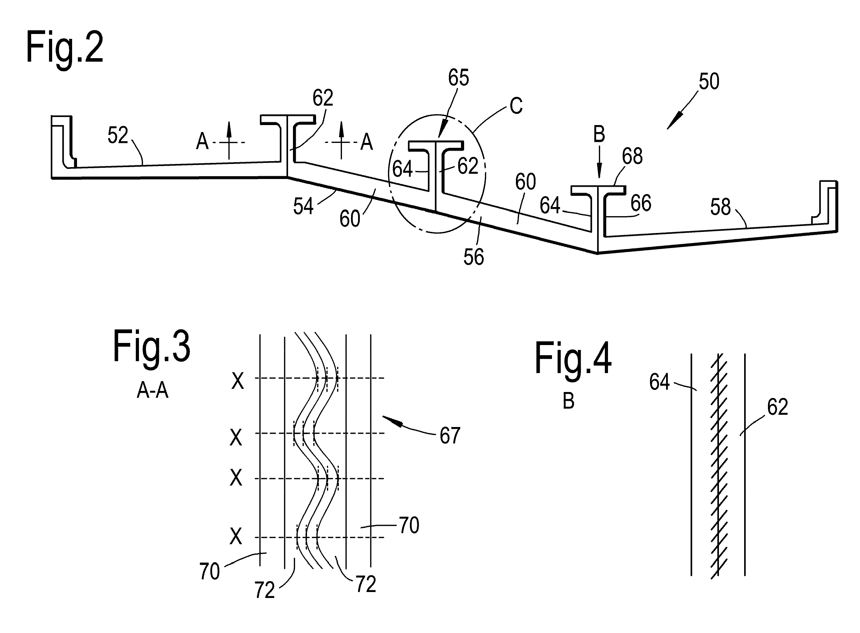

The casing 50 will now be described in more detail with reference to Figure 2. The casing 50 is annular. The casing is formed of four axially adjacent sections or bodies 52, 54, 56, 58. In the present embodiment the casing is formed using two substantially cylindrical bodies 52, 58 and two substantially frustoconical bodies 54, 56. The two substantially frustoconcial bodies being positioned adjacent to each other and each of the cylindrical bodies being positioned adjacent one of the frustoconical bodies. Each body includes a barrel 60 (only labelled on bodies 54 and 56 for clarity) and a flanged end. In the present embodiment both axial ends of the body include a flange 62, 64 (only labelled on bodies 54 and 56). Adjacent bodies are connected together via the flanged ends. A flange of one body is connected to an adjacent flange of an adjacent body, the two connected flanges forming a stiffening ring 65.

Each flange 62, 64 extends radially outwardly away from the barrel 60. Each flange 62, 64 includes a web 66 and a lip 68 (only labelled on one flange for clarity). The lip 68 is positioned at an end of the web 66 distal to the barrel. The lip, web and a portion of the barrel adjacent the web from a C-shaped section. The C-shaped section of flange 62 of one body and the C-shaped section of adjacent flange 64 of an adjacent body together form an I-beam shape.

Referring to Figure 3, the web 66 of each flange forms a web 67 of the stiffening ring 65. The web of the stiffening ring includes a central region that has a waved profile. The waved profile extends in a circumferential direction, i.e. the axial position of the central region varies circumferentially. The waved profile is curved to avoid any sharp steps to reduce the risk of fibre crimping. In the present embodiment the waved profile is sinusoidal, but the shape of the waved profile may vary and may not necessarily be regular. For example, an irregular waved profile may be used to provide an alignment feature during assembly of the bodies 52, 54, 56, 58.

The web 66 of each flange is formed from a flange body 70 and a face plate 72. The flange body is formed integrally with the barrel. The face plate 72 is connected to the flange body. The flange body has an end face that is planar and the face plate has a planar face that is positioned adjacent the planar face of the flange body. The opposite face (e.g. the end face) of the face plate includes a waved or undulating profile. The waved profile extends in the circumferential direction. The waved profile of one face plate of one flange 62 is complementary to or mates with the face plate of an adjacent flange 64.

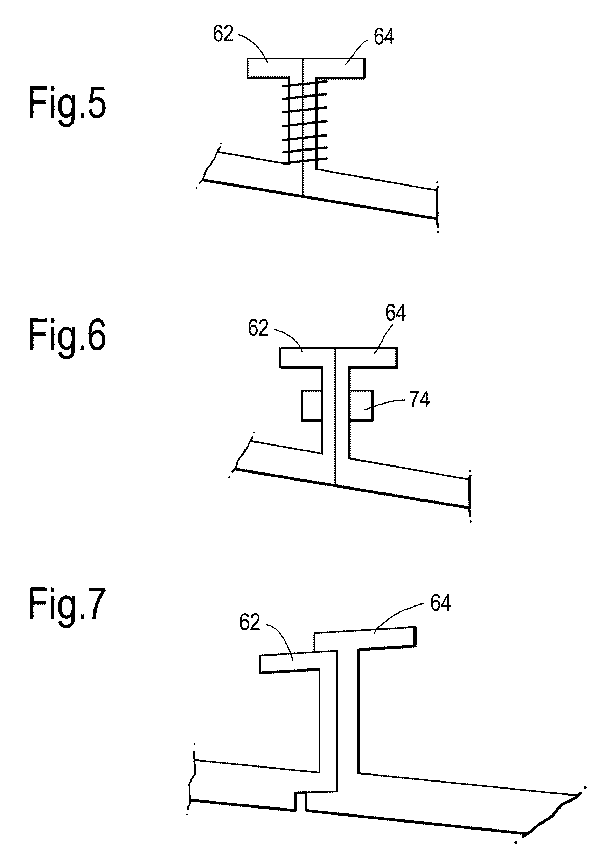

Adjacent flanges 62, 64 can be joined together using various methods. For example, as shown in Figure 4 the radial ends (or the top and bottom) of the flange can be stitched together using a face over stitch. In addition the flanges can be stitched or pinned, as illustrated in Figure 5, along their radial length.

Alternative methods of connecting the flanges 62, 64 together include bolting the flanges together, as illustrated in Figure 6. The bolts 74 extend through the flanges 62, 64 at the positions indicated at "X" in Figure 3. At the position "X" the region of the web 66 having a waved profile is substantially perpendicular to the longitudinal axis of the engine in a plane defined by a tangent to the circumferential direction and the longitudinal axis. Position "X" is also the position where the waved profile changes from extending axially rearward or forward to extending axially forward or rearward respectively. In further alternative embodiments, the flanges 62, 64 may be joined using extended collar or barrel arrangements, e.g. arrangements similar to those described in EP2538035.

Instead of using the face over stitch illustrated in Figure 4, the flanges 62, 64 may be shaped to form a joint similar to a lap joint, e.g. so that a portion of one flange 64 overlaps a portion of the other flange 62. Face over stitch or a lap joint help protect against radial or circumferential shear through the mating faces, especially in the event of a fan blade or part of a fan blade being released and impacting the fan case. Providing an overlapping surface helps the design resist fire transfer between fire zones.

The barrel 60 is manufactured using automated tape laying with a shaped former, which allows the flanges 62, 64 to be upturned or formed post tape lay. Laying of dry tape into a mould is also possible.

However, in alternative embodiments the barrel may be manufactured using any suitable composite manufacturing technique. As mentioned above, the flange body 70 of the flanges 62, 64 are formed integrally with the barrel 60 using techniques known in the art. The face plate 72 of the flanges 62, 64 in the present embodiment is manufactured using braiding, but as will be understood by the person skilled in the art, other manufacturing techniques may be used. For example, the barrel and flanges may be made by a single method such as braiding either directly onto a former, or as a dry preform that is subsequently moulded and Resin Transfer Moulded. Alternatively, the barrel and flanges made be made by different processes either together or at separate times in the manufacturing process.

When the flanges 62, 64 are stitched or pinned together, the resulting casing assembly can be placed in an enclosed die for Resin Transfer Moulding (RTM), resin can then be injected and the casing assembly cured.

Advantageously, the provision of the stiffening rings 65 means that the barrel 60 of each section 52, 54, 56, 58 can be of a thinner thickness than casings of the prior art, which can reduce to the overall weight of the casing. Forming the flanges integrally with the barrel means that the stiffening ring can more easily be positioned where desired. Furthermore, forming the flange and therefore the stiffening ring integrally with the barrel removes interface weaknesses that can form when the stiffening ring is formed separately and then connected to the barrel.

The region of the I-beam or stiffening ring having a waved profile has been found to have improved stiffness compared to a standard I-beam arrangement. It is thought that this is because the waviness of the profile distributes loads over a greater range of fibre packs. The waved profile also increases the footprint of the stiffening ring which increases rolling resistance of the stiffening ring.

Provision of a flange body and a face plate to form the flanges 62, 64 means that the complex waved profile can be more easily formed, compared to tape laying a casing with an integral stub flange having a waved profile.

In embodiments where the flanges are bolted together, sections of the casing can be removed for replacement or repair as required.

It will be appreciated by one skilled in the art that, where technical features have been described in association with one or more embodiments, this does not preclude the combination or replacement with features from other embodiments where this is appropriate. Furthermore, equivalent modifications and variations will be apparent to those skilled in the art from this disclosure. Accordingly, the exemplary embodiments of the invention set forth above are considered to be illustrative and not limiting.

For example, the described configuration of I-beam (or T-beam) may be used as a stiffening member that is formed separately to the body of a component to be stiffened.

The casing described is a fan casing, but in alternative embodiments the casing may be used as a casing on other parts of a gas turbine engine or may be used in alternative applications where a composite casing is desired.

The stiffener (in this case the stiffening ring) has been described with reference to a casing, but the stiffening ring may be used on other components for example wing spars and fuel tanks.

The stiffening ring described can be considered to have a T-shaped cross section so as to form an I-beam with the barrel. However, in alternative embodiments the stiffening ring may have a C-shaped cross section. For example, the flange 62 may form a C-shape with the barrel on which the flange 62 is provided and the flange 64 may form a Z-shape with the barrel on which the flange 64 is provided; an upper end of the Z-shape overlapping an upper end of the C-shape.

## Claims

1. A composite casing (50) comprising:
a barrel (60); and
a stiffening ring (65) provided around the barrel;
wherein the stiffening ring includes a section (72) having a waved profile in a circumferential direction, and **characterised in that** the waved profile comprises a series of curves.

2. The casing according to claim 1, wherein the stiffening ring comprises a first member (62) and a second member (64) joined together, a face of the first member having a waved profile and a face of the second member having a waved profile that is complementary to the waved profile of the first member, the waved profile of the first and second member forming the section of the stiffening ring having a waved profile.

3. The casing according to claim 1 or 2, wherein the waved profile has a sinusoidal form.

4. The casing according to any one of the previous claims, wherein the stiffening ring is integrally formed with the barrel.

5. The casing according to any one of the previous claims, wherein the stiffening ring includes a web (66, 67) extending radially from the barrel and a lip (68) positioned distal to the barrel and extending in an axially forward and an axially rearward direction.

6. The casing according to claim 5, wherein the web includes a region having a waved profile.

7. The casing according to claim 6, wherein the axial position of the web with respect to the lip varies circumferentially along the stiffening ring.

8. The casing according to any one of the previous claims, wherein the barrel comprises a first body (52, 54, 56, 58) having a flanged end and a second body (52, 54, 56, 58) having a flanged end, the first body being connected to the second body via the flanged end, and wherein an end face of the flanged end of the first body has a waved profile and an end face of the flanged end of the second body has a waved profile, the waved profile of the end face of the first body being complementary to the waved profile of the end face of the second body.

9. The casing according to claim 8, wherein the flanged ends are formed integrally with the respective first and second bodies.

10. The casing according to claim 8 or 9, wherein the flange of the first body is releasably joined to the flange of the second body.

11. The casing according to claim 8 or 9, wherein the flange of the first body is stitched or pinned to the flange of the second body.

12. The casing according to any one of claims 8 to 11, wherein the flanged ends of the first body and the second body include a lip at an end distal to the first and second body respectively.

13. The casing according to any one of claims 8 to 12, wherein the flanged end of the first and/or second body comprises a flange body (70) and a face plate (72) having a waved profile, the face plate being connected to the flange body.

14. A gas turbine engine comprising the casing according to any one of the previous claims.

## Patentansprüche

1. Verbundummantelung (50), umfassend:
ein Gehäuse (60); und
einen Versteifungsring (65), der um das Gehäuse bereitgestellt ist;
wobei der Versteifungsring einen Abschnitt (72) mit einem Wellenprofil in einer Umfangsrichtung umfasst und **dadurch gekennzeichnet, dass** das Wellenprofil eine Reihe von Krümmungen umfasst.

2. Ummantelung nach Anspruch 1, wobei der Versteifungsring ein erstes Element (62) und ein zweites Element (64), die miteinander verbunden sind, umfasst, wobei eine Fläche des ersten Elements ein Wellenprofil aufweist und eine Fläche des zweiten Elements ein Wellenprofil aufweist, welches komplementär zu dem Wellenprofil des ersten Elements ist, wobei das Wellenprofil des ersten und zweiten Elements den Abschnitt des Versteifungsrings mit einem Wellenprofil bilden.

3. Ummantelung nach Anspruch 1 oder 2, wobei das Wellenprofil eine Sinusform aufweist.

4. Ummantelung nach einem der vorhergehenden Ansprüche, wobei der Versteifungsring einstückig mit dem Gehäuse ausgebildet ist.

5. Ummantelung nach einem der vorhergehenden Ansprüche, wobei der Versteifungsring ein Netz (66, 67), das sich radial von dem Gehäuse erstreckt, und eine Lippe (68) umfasst, die distal zu dem Gehäuse angeordnet ist und sich in einer axialen Forwärts- und einer axialen Rückwärtsrichtung erstreckt.

6. Ummantelung nach Anspruch 5, wobei das Netz einen Bereich mit einem Wellenprofil umfasst.

7. Ummantelung nach Anspruch 6, wobei die axiale Anordnung des Netzes bezüglich der Lippe in Umfangsrichtung entlang des Versteifungsrings variiert.

8. Ummantelung nach einem der vorhergehenden Ansprüche, wobei das Gehäuse einen ersten Körper (52, 54, 56, 58) mit einem Flanschende und einen zweiten Körper (52, 54, 56, 58) mit einem Flanschende umfasst, wobei der erste Körper über das Flanschende mit dem zweiten Körper verbunden ist und wobei eine Endfläche des Flanschendes des ersten Körpers ein Wellenprofil aufweist und eine Endfläche des Flanschendes des zweiten Körpers ein Wellenprofil aufweist, wobei das Wellenprofil der Endfläche des ersten Körpers komplementär zu dem Wellenprofil der Endfläche des zweiten Körpers ist.

9. Ummantelung nach Anspruch 8, wobei die Flanschenden einstückig mit dem entsprechenden ersten und zweiten Körper ausgebildet sind.

10. Ummantelung nach Anspruch 8 oder 9, wobei der Flansch des ersten Körpers freigebbar mit dem Flansch des zweiten Körpers verbunden ist.

11. Ummantelung nach Anspruch 8 oder 9, wobei der Flansch des ersten Körpers mit dem Flansch des zweiten Körpers vernäht oder verstiftet ist.

12. Ummantelung nach einem der Ansprüche 8 bis 11, wobei die Flanschenden des ersten Körpers und des zweiten Körpers eine Lippe bei einem Ende umfassen, das distal zu dem ersten bzw. zweiten Körper ist.

13. Ummantelung nach einem der Ansprüche 8 bis 12, wobei das Flanschende des ersten und/oder zweiten Körpers einen Flanschkörper (70) und eine Planscheibe (72) mit einem Wellenprofil umfasst, wobei die Planscheibe mit dem Flanschkörper verbunden ist.

14. Gasturbinentriebwerk, umfassend die Ummantelung nach einem der vorhergehenden Ansprüche.

## Revendications

1. Corps composite (50), comprenant :
un cylindre (60) ; et
un anneau raidisseur (65) pratiqué autour du cylindre ;
l'anneau raidisseur comprenant une section (72) présentant un profil ondulé dans une direction circonférentielle, et **caractérisé en ce que** le profil ondulé comprend une série de courbes.

2. Corps selon la revendication 1, l'anneau raidisseur comprenant un premier élément (62) et un deuxième élément (64) joints l'un à l'autre, une face du premier élément présentant un profil ondulé, et une face du deuxième élément présentant un profil ondulé complémentaire au profil ondulé du premier élément, le profil ondulé des premier et deuxième éléments constituant une section de l'anneau raidisseur présentant un profil ondulé.

3. Corps selon la revendication 1 ou 2, le profil ondulé ayant une forme sinusoïdale.

4. Corps selon une quelconque des revendications précédentes, l'anneau raidisseur étant formé de façon intégrale avec le cylindre.

5. Corps selon une quelconque des revendications précédentes, l'anneau raidisseur comprenant une âme (66, 67) s'étendant radialement depuis le cylindre, un et rebord (68) positionné dans une position distale par rapport au cylindre, s'étendant dans une direction axialement vers l'avant et axialement vers l'arrière.

6. Corps selon la revendication 5, l'âme comprenant une zone présentant un profil ondulé.

7. Corps selon la revendication 6, la position axiale de l'âme relativement au rebord variant sur un plan circonférentiel le long de l'anneau raidisseur.

8. Corps selon une quelconque des revendications précédentes, le cylindre comprenant un premier corps (52, 54, 56, 58) doté d'une extrémité à bride et un deuxième corps (52, 54, 56, 58) doté d'une extrémité à bride, le premier corps étant raccordé au deuxième corps par le biais d'une extrémité à bride, et une face d'extrémité de l'extrémité à bride du premier corps possédant un profil ondulé, et une face d'extrémité de l'extrémité à bride du deuxième corps possédant un profil ondulé, le profil ondulé de la face d'extrémité du premier corps étant complémentaire du profil ondulé de la face d'extrémité du deuxième corps.

9. Corps selon la revendication 8, les extrémités à bride faisant partie intégrante des premier et deuxième corps correspondants.

10. Corps selon la revendication 8 ou 9, la bride du premier corps étant jointe de façon amovible à la bride du deuxième corps.

11. Corps selon la revendication 8 ou 9, la bride du premier corps étant cousue ou épinglée sur la bride du deuxième corps.

12. Corps selon une quelconque des revendications 8 à 11, les extrémités à bride du premier corps et du deuxième corps comprenant un rebord sur une extrémité distale du premier et du deuxième corps respectivement.

13. Corps selon une quelconque des revendications 8 à 12, l'extrémité à bride du premier et/ou du deuxième corps comprenant un corps de bride (70) et une plaque frontale (72) présentant un profil ondulé, la plaque frontale étant connectée au corps de la bride.

14. Moteur à turbine à gaz comprenant le corps selon une quelconque des revendications précédentes.
